# EUROPÄISCHE PATENTANMELDUNG

(11) **EP 4 696 203 A1**
(43) Veröffentlichungstag der Anmeldung: **18.02.2026**
(21) Anmeldenummer: 25191557.5
(22) Anmeldetag: 24.07.2025
(51) Int. Cl.: A47J 27/00, A47J 36/12, A47J 27/14

(54) **KOCHVORRICHTUNG**

(30) Priorität: 14.08.2024 DE 102024123262
(71) Anmelder: Illinois Tool Works Inc., Glenview IL 60025 (US)
(72) Erfinder: Amstutz, Thomas, Glenview, 60025 (US)
(74) Vertreter: HGF

(57) **Zusammenfassung**

Die erfindungsgemäße Kochvorrichtung umfasst eine Topfeinrichtung mit einem Gehäuse, eine Deckeleinrichtung zum Verschließen der Topfeinrichtung, eine Scharniereinrichtung mit einem Scharniergehäuse, die die Deckeleinrichtung schwenkbar mit der Topeinrichtung verbindet, und eine Detektionseinrichtung zum Detektieren eines Öffnungszustandes der Deckeleinrichtung, wobei die Detektionseinrichtung im Bereich der Scharniereinrichtung angeordnet ist.

## Beschreibung

Die Erfindung betrifft eine Kochvorrichtung zur Zubereitung von Speisen.

In Großküchen werden Speisen vor allem in Behältnissen mit großem Fassungsvermögen zubereitet. Derartige Behältnisse werden als Topf oder Pfanne bezeichnet.

Je nach Garart wird eine andere Form eines Garbehälters bevorzugt verwendet.

Beim Braten wird ein Garbehältnis verwendet, das eine relativ flache Form aufweist, um eine relativ große Öffnung in Relation zum Volumen des Behälterkörpers auszubilden. Durch die größere Öffnung im Vergleich zum Volumen reduziert sich Flüssigkeit schneller als in einem Garbehältnis gleichen Volumens. Garbehältnisse dieser Form werden als Pfannen definiert. Die schnelle Reduzierung von Flüssigkeit ist besonders beim Braten von Vorteil, da der Bratvorgang sich dadurch auszeichnet, dass mit relativ großer trockener Hitze gegart wird.

Im Gegensatz zur Pfanne weist ein Kochtopf eine kleinere Öffnung relativ zum Volumen des Garbehälters auf. Dadurch bleibt Flüssigkeit länger im Kochtopf erhalten. Deshalb wird bei der Garart Kochen in heißem Wasser von ca. 100 °C ein Kochtopf verwendet.

Bei anderen Gararten, wie beispielsweise dem Schmoren oder dem Dampfgaren oder eine Zwischenform, wird auf den Kochtopf oder die Pfanne ein Deckel aufgesetzt, um die Reduzierung von Flüssigkeit trotz Erhitzung zu verringern. Somit verbleibt mehr Flüssigkeit im Gargut.

Beim Dampfgaren wird somit ein Garraum mit Dampf gefüllt und das Gargut hineingelegt. Für die Erzeugung eines solchen Garraums wird Wasser zum Kochen gebracht, damit sich Wasserdampf über der Oberfläche des kochenden Wassers ausbreitet. Mithilfe eines Deckels wird der Wasserdampf im Garraum gehalten.

Schmoren ist ein kombiniertes Garverfahren, wobei das Gargut zunächst angebraten und anschließend in siedender Flüssigkeit weiter gegart wird. Dafür wird das Gargut unter trockener Hitze ohne Deckel angebraten und anschließend mit einer Flüssigkeit versetzt, die mittels eines Deckels im Kochtopf gehalten wird.

Je nach Art der Speise werden zur Zubereitung verschiedene Gararten verwendet. Dabei spielt die Position bzw. der Öffnungszustand des Deckels eine Rolle.

Die Deckel für Behältnisse in Großküchen sind aufgrund ihrer Größe und ihres Gewichts oft schwer per Hand auf die Töpfe oder Pfannen aufzusetzen. Deshalb sind die Deckel zumeist schwenkbar am Rand der Öffnung der Behältnisse angebracht.

Um verschiedene Öffnungszustände des Deckels zu realisieren und/oder eine Bedienperson beim Verändern des Öffnungszustandes des Deckels zu unterstützen, sind spezielle Deckeldrehgelenke entwickelt worden.

Aus dem Dokument DE 10 2017 210 842 B3 geht ein Deckeldrehgelenk für ein Küchenarbeitsgerät zur Änderung des Öffnungszustandes des Deckels hervor. Zwischen zwei Lagerböcken ist ein mit dem Deckel verbundenes Mittelstück angebracht. Mit einem der Lagerböcke ist ein ortsfestes Kurvenelement verbunden. Ein zweites Kurvenelement ist fest mit dem Mittelstück verbunden. Die beiden Kurvenelemente greifen derart ineinander, dass sich die beiden Kurvenbahnen in Gleiteingriff befinden und dass durch den Anschlag der Kurvenelemente ein maximaler Verstellwinkel des Deckels definiert ist.

Drehgelenke zum Halten oder Verstellen der Deckelöffnung von Garbehältnissen in Großküchen sind demnach bekannt.

Je nach Rezept ist es nötig, dass eine bestimmte Deckelöffnung des Garbehälters gehalten oder verändert wird. Da in Großküchen oftmals mehrere dieser Garbehälter parallel im Einsatz sind, ist es vonnöten, den Überblick über die Öffnungszustände der Deckel zu behalten. Beispielsweise erfordern es manche Gerichte, dass der Deckel zum Anbraten 2-3 Minuten geöffnet ist und anschließend für 1-2 Stunden zum Schmoren bzw. Durchgaren geschlossen wird.

Es ist Aufgabe der Erfindung, eine Vorrichtung bereitzustellen, durch welche einerseits der Deckel eines Großküchengarbehälters in verschiedenen Zuständen aufsetzbar ist und andererseits die Deckelöffnung über der Kochvorrichtung bestimmbar ist.

Weiterhin ist es Aufgabe der Erfindung, eine zuverlässige und wenig wartungsintensive Deckelöffnung zu bestimmen.

Eine erfindungsgemäße Kochvorrichtung umfasst:
- eine Topfeinrichtung,
- eine Deckeleinrichtung zum Verschließen der Topfeinrichtung,
- eine Scharniereinrichtung, die die Deckeleinrichtung schwenkbar mit der Topfeinrichtung verbindet, und
- eine Detektionseinrichtung zum Detektieren eines Öffnungszustandes der Deckeleinrichtung,
wobei die Detektionseinrichtung im Bereich der Scharniereinrichtung angeordnet ist.

Die Topfeinrichtung kann entweder als Topf bzw. Kochtopf oder Pfanne ausgebildet sein.

Die Deckeleinrichtung zum Verschließen der Topfeinrichtung ist derart ausgebildet, dass die Öffnung der Topfeinrichtung vollständig oder teilweise schließbar ist.

Durch die Scharniereinrichtung ist die Deckeleinrichtung schwenkbar mit der Topfeinrichtung verbunden. Dadurch muss die Deckeleinrichtung, die aufgrund ihrer Größe und ihres Gewichts Kraftaufwendungen der Bedienperson erfordert, nicht händisch auf die Topfeinrichtung aufgesetzt werden. Daraus ergibt sich der Vorteil, dass kein separater Platz für die Deckeleinrichtung im Öffnungszustand gefunden werden muss.

Weiterhin ist durch die schwenkbare Verbindung der Deckeleinrichtung mit der Topfeinrichtung ein schneller Wechsel des Öffnungszustandes möglich. Die Deckeleinrichtung muss nur um eine Schwenkachse bewegt werden. Somit ist aufgrund der Scharniereinrichtung ein einfaches Auf- und/oder Zuklappen der Deckeleinrichtung möglich.

Außerdem wird durch die Scharniereinrichtung sichergestellt, dass die Deckeleinrichtung im geschlossenen Zustand richtig auf der Topfeinrichtung platziert ist. Somit kann in der geschlossenen Stellung eine passende abgedichtete Position der Deckeleinrichtung auf der Topfeinrichtung sichergestellt werden.

Die Detektionseinrichtung zur Überwachung des Öffnungszustands der Deckeleinrichtung ist vor allem vorteilhaft, wenn mehrere Kochvorrichtungen in einer Großküche stehen. Somit kann überwacht werden, welche Vorrichtungen welchen Öffnungszustand der Deckeleinrichtung aufweisen.

Aus der Anordnung der Detektionseinrichtung im Bereich der Scharniereinrichtung ergibt sich der Vorteil, dass die Bewegungen direkt in der Scharniereinrichtung auslesbar sind.

Die Scharniereinrichtung kann ein Gehäuse aufweisen, wobei die Detektionseinrichtung innerhalb des Gehäuses der Scharniereinrichtung angeordnet ist. Insbesondere ist die Detektionseinrichtung über das Gehäuse der Scharniereinrichtung von äußeren Einflüssen schützend abgedichtet ist.

Im Gegensatz zu einer Detektionseinrichtung, die am Rand der Topfeinrichtung oder der Deckeleinrichtung als Stiftelement oder optoelektronischer Sensor angebracht ist, ergibt sich durch eine solche Anordnung (d.h. innerhalb des Scharniergehäuses), dass die Detektionseinrichtung vor äußeren Einflüssen geschützt ist. Beim Kochen oder Putzen der Kochvorrichtung kommt die Detektionseinrichtung somit nicht mit Speiseresten oder Putzmittel in Berührung. Dadurch erhöht sich die Lebensdauer und die Zuverlässigkeit der Detektionseinrichtung.

Beispielsweise ist es möglich, dass ein Drehpotentiometer in der Scharniereinrichtung angeordnet ist und die Drehbewegung der Scharniereinrichtung aufnimmt oder die Bewegung der Scharniereinrichtung an einen Sensor im inneren des Gehäuses übertragen wird.

Die Detektionseinrichtung kann ein Geberelement zur Übersetzung einer Schwenkbewegung (Rotation des Deckels) in eine Linearbewegung, und einen Sensor zur Aufnahme der Linearbewegung aufweisen.

Dabei erweist sich die Übersetzung einer Schwenkbewegung in eine Linearbewegung als besonders vorteilhaft, da keine Winkelgröße bestimmt werden muss, sondern eine lineare Wegänderung die (Öffnungs-) Position der Deckeleinrichtung wiedergibt.

Das Geberelement kann in der Scharniereinrichtung (innerhalb des Scharniergehäuses) angeordnet sein und in das Gehäuse der Topfeinrichtung oder ein angrenzendes Gehäuse der Detektionseinrichtung hineinragen. Dabei kann das Geberelement zum Zusammenwirken mit dem Sensor ausgebildet sein und der Sensor kann abgedichtet im Gehäuse der Topfeinrichtung oder im angrenzenden Gehäuse der Detektionseinrichtung angeordnet sein.

Daraus ergibt sich der Vorteil, dass der Sensor durch das Gehäuse der Scharniereinrichtung und/oder der Detektionseinrichtung vor äußeren Einflüssen geschützt ist. Damit wird die Langlebigkeit und Zuverlässigkeit des Sensors erhöht.

Durch diese Anordnung sind das Geberelement und der Sensor lediglich durch einen physikalischen, mechanischen Kontakt verbunden. Es liegt also kein elektrischer Kontakt zwischen der Scharniereinrichtung und dem Sensor vor. Auf diese Weise sind Scharniereinrichtung und Sensor unabhängig voneinander austauschbar, was die Wartungsfreundlichkeit der Kochvorrichtung weiter erhöht.

Aufgrund dieser Anordnung, ist es auch möglich den Sensor hitzegeschützt abzudichten. Weiterhin gelangt durch eine entsprechende Abdichtung keine Feuchtigkeit an die Elektronik des Sensors (d.h. das Scharniergehäuse und das Gehäuse der Topfeinrichtung oder ein angrenzendes Gehäuse der Detektionseinrichtung schützen den Scharniermechanismus, das Geberelement und den Sensor vor äußeren Einflüssen).

Die Scharniereinrichtung kann ein Vorspannelement aufweisen, das eine vorgespannte Federeinrichtung, einen ortsfesten- und einen beweglichen Teil umfasst. Dabei können die Kreisflächen oder auch Kurvenflächen (oder auch Nockenflächen) des beweglichen und des ortsfesten Teils durch eine Drehbewegung der Scharniereinrichtung ineinandergreifen, oder auseinanderbewegt werden. Dadurch kann die Federeinrichtung entsprechend vorspannbar und/oder entspannbar sein.

Auf diese Weise ergibt sich, dass die Scharniereinrichtung allein durch entsprechend angepasste Federkraft in der Lage ist, die Deckeleinrichtung in einem gewünschten Öffnungszustand zu halten.

Durch den Aufbau mit dem beweglichen und ortsfesten Teil und den dazugehörenden ineinandergreifend und kontaktierend gekoppelten Kurvenflächen (oder s.g. Kreisflächen) können verschiedene Öffnungswinkel realisiert werden. D.h., je nach erforderlicher Deckelöffnung kann die Deckeleinrichtung auf einen gewünschten Öffnungswinkel eingestellt werden.

Weiterhin kann eine Federkrafteinstelleinrichtung vorgesehen sein. Diese umfasst ein plattenförmiges Element, das an der dem Vorspannelement gegenüberliegenden Seite der Federeinrichtung zwischen Federeinrichtung und Scharnierhülle angeordnet sein kann und mittels einer Stellschraube in Längsrichtung der Federeinrichtung verschiebbar ist.

Das Deckelgewicht (Drehmoment) kann somit für das Drehgelenks exakt eingestellt werden, wobei das plattenförmige Element mittels der Stellschraube axial soweit verschoben wird, bis die Federkraft an das durch das Deckelgewicht verursachte Drehmoment angepasst ist. Somit kann die Federkraft und demzufolge das Drehmoment der Dreheinrichtung stufenlos eingestellt werden. Dies ist vorteilhaft, da verschieden große und unterschiedlich schwere Deckel vorgesehen sein können. Der Verstellbereich der Scharniereinrichtung kann z.B. mit der Anzahl der im Federelement umfassten Federn (z.B. 3 Stück) und der die Federspannung verstellende Stellschraube über einen großen Drehmomentbereich eingestellt werden.

Das Geberelement kann fest mit dem beweglichen Teil der Federeinrichtung verbunden sein, um eine Schwenkbewegung der Deckeleinrichtung entsprechend in eine lineare Verschiebung des beweglichen Teils und dadurch in eine lineare Verschiebung des Geberelements in Axialrichtung umzusetzen.

Durch die Umsetzung der Schwenkbewegung in eine lineare Verschiebung des beweglichen Teils, kann eine lineare Bewegung des Geberelements detektiert werden.

Die Detektion eines linearen Weges bietet den Vorteil gegenüber der Detektion einer Schwenk- bzw. Drehbewegung, z.B. mit einem Drehpotentiometer, dass der aufgrund der Lebensdauer hervorgerufene Abrieb in einem Drehpotentiometer keinen signifikanten Einfluss auf die Messgröße hat.

Das Geberelement kann durch die Verschiebungen in Axialrichtung einen Messfühler auslenken, sodass die Auslenkung des Messfühlers von einem Linearsensor detektierbar ist.

Auf diese Weise besteht zwischen dem Geberelement, welches fest mit der Scharniereinrichtung innerhalb des Scharniergehäuses verbunden ist, und dem Sensor (z.B. innerhalb des Gehäuses der Topfeinrichtung oder in einem angrenzenden Gehäuse der Detektionseinrichtung) lediglich ein mechanischer Kontakt. Dadurch erhöht sich die Wartungsfreundlichkeit der Anordnung, da die Scharniereinrichtung und der Sensor unabhängig voneinander austauschbar sind. Weiterhin können keine elektrischen Störungen (oder eine elektrische Ladung) von Elementen der Scharniereinrichtung auf den Sensor übertragen werden, was die Detektion fehlerhaft beeinflussen könnte.

Der Linearsensor kann z.B. ein Potentiometer, ein Amperemeter und/oder einen elektrischen Schalter aufweisen, um eine Spannungs- und/oder Stromänderung an einer Auswerteeinrichtung zu detektieren.

Besonders ein elektrischer Schalter erweist sich bei gegebener Anordnung als vorteilhaft, da der Messfühler gleichzeitig als Schalthebel verwendet werden kann. In einer Ausführungsform kann der Schalthebel als Rollenhebel ausgebildet sein. Dadurch ergibt sich eine gleichmäßigere Kraftverteilung und die Lebensdauer des Schalthebels, sowie des gesamten elektrischen Schalters wird erhöht.

Es ist aber auch möglich, dass am Messfühler ein Potentiometer und/oder ein Amperemeter angeschlossen sind/ist und durch entsprechende Auslenkung des Messfühlers die Spannung bzw. der Strom am Sensor veränderbar ist.

Der Öffnungszustand kann ein geschlossener- oder ein offener Zustand der Deckeleinrichtung sein und/oder, der Öffnungszustand kann als ein beliebiger Öffnungsbereich oder ein Öffnungswinkel der Deckeleinrichtung von der Detektionseinrichtung bestimmbar sein.

Mit der vorliegenden Kochvorrichtung ist es also möglich zu bestimmen, ob die Deckeleinrichtung geöffnet oder geschlossen auf der Topfeinrichtung aufsitzt. Weiterhin ist festlegbar, ob der Öffnungszustand als Öffnungsbereich oder Öffnungswinkel der Deckeleinrichtung gegenüber der Topfeinrichtung detektierbar ist, d.h. inwieweit der Deckel die Topföffnung verdeckt oder in welchem Öffnungswinkel der Deckel zur Oberfläche des Topfrandes steht.

Ein beliebiger Öffnungsbereich kann dadurch bestimmt sein, dass zum Beispiel die Deckeleinrichtung gegenüber der Topfeinrichtung viertel-, halb-, dreiviertel- oder vollständig geöffnet ist, wobei die Unterschiede zwischen viertel, halb, dreiviertel und vollständig als Stufenbereiche eingestellt sind. Es ist beispielsweise auch möglich einen Öffnungsbereich für die Garart "Schmoren" und eine anderen Öffnungsbereich für die Garart "Kochen" festzulegen. Das Erreichen dieses Öffnungsbereichs kann von einer Anzeigeeinrichtung angezeigt werden.

Der Öffnungswinkel der Deckeleinrichtung gegenüber der Topfeinrichtung wird in Gradzahlen bestimmt. Beispielsweise ist ein Öffnungswinkel von 10° bis 110° denkbar. Je nach Scharniereinrichtung ist es jedoch auch möglich, Öffnungswinkel von 5°-90° oder 10°-95° festzulegen. Der Öffnungswinkel kann entweder stufenweise, d. h. in 5°- bzw. 10°- bzw. 20°-Schritten oder stufenlos verändert werden. Es ist denkbar, dass der Öffnungswinkel als Gradzahl von einer Anzeigeeinrichtung im Bereich der Kochvorrichtung angezeigt wird.

Der Öffnungszustand der Deckeleinrichtung kann von einer Aktuatoreinrichtung einstellbar sein.

Dabei kann die Aktuatoreinrichtung entweder im Bereich der Scharniereinrichtung oder der Deckeleinrichtung angeordnet sein. Dadurch ist es möglich, dass die Aktuatoreinrichtung auf die Scharnier- und/oder Deckeleinrichtung einwirkt.

Die Auswerteeinrichtung kann mit einer Kontrolleinrichtung verbunden sein, um über eine Rückkopplungsschleife den Öffnungszustand über die Aktuatoreinrichtung, und/oder eine Wasserzufuhr und/oder Heiztemperatur derart zu steuern, dass der Zubereitungsvorgang innerhalb der Kochvorrichtung kontrollierbar ist.

Auf diese Weise können Rezepte, die verschiedene Gararten in einer bestimmten Reihenfolge erfordern, in ein automatisches Programm umgesetzt werden. Die Zubereitung von Speisen kann somit automatisiert werden, was die Arbeit in einer Großküche für die Bedienungspersonen erleichtert.

Die vorliegende Erfindung wird im Folgenden anhand eines in den Figuren dargestellten Ausführungsbeispiels näher beschrieben. Diese zeigen in:
- **Figur 1**: eine perspektivische Darstellung eine erfindungsgemäßen Kochvorrichtung;
- **Figur 2**: eine perspektivische Darstellung einer erfindungsgemäßen Scharniereinrichtung und einer im Bereich der Scharniereinrichtung innerhalb des Scharniergehäuses und/oder des Gehäuses der Topfvorrichtung angebrachten Detektionseinrichtung;
- **Figur 3**: eine Explosionsdarstellung einer Ausführungsform der Scharniervorrichtung der vorliegenden Erfindung;
- **Figur 4**: (a) eine perspektivische Darstellung der Scharniervorrichtung mit durchsichtig illustriertem Scharniergehäuse, (b) einer Unteransicht der Scharniervorrichtung, und (c) einer Schnittdarstellung entlang Schnittebene ***A-A;***
- **Figur 5**: eine perspektivische Querschnittsdarstellung entlang einer Längsseite einer Ausführungsform erfindungsgemäßen Scharniereinrichtung und Detektionseinrichtung;
- **Figur 6**: eine perspektivische Darstellung einer Scharniereinrichtung mit einer Ausführungsform der Kurvenflächen der Kurvenelemente, mit dem Vorspannelement und Federeinrichtung im gespannten Zustand, und
- **Figur 7**: eine perspektivische Darstellung einer Scharniereinrichtung mit einer alternativen Ausführungsform der Kurvenflächen der Kurvenelemente, mit dem Vorspannelement und Federeinrichtung im gespannten Zustand.

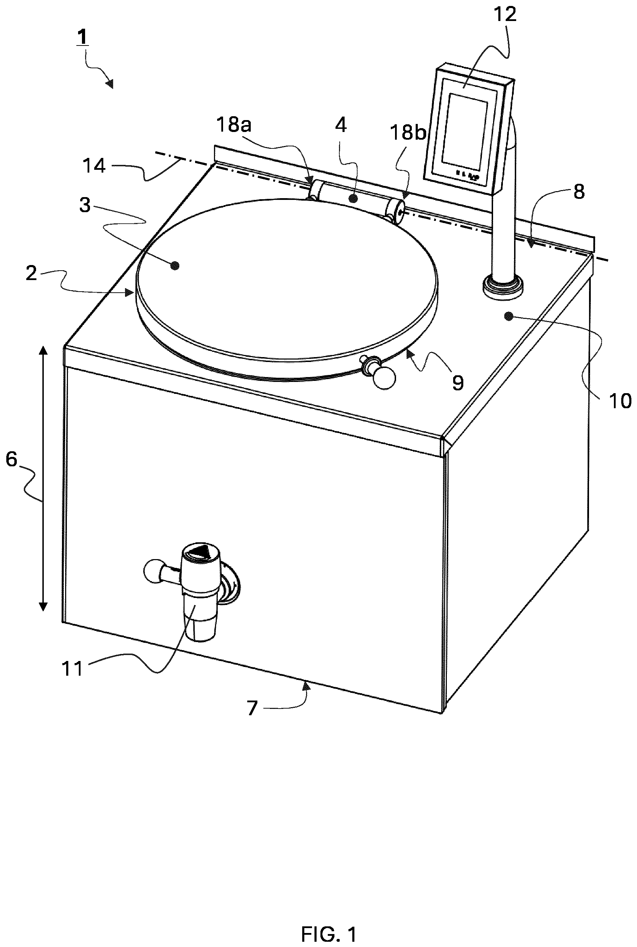

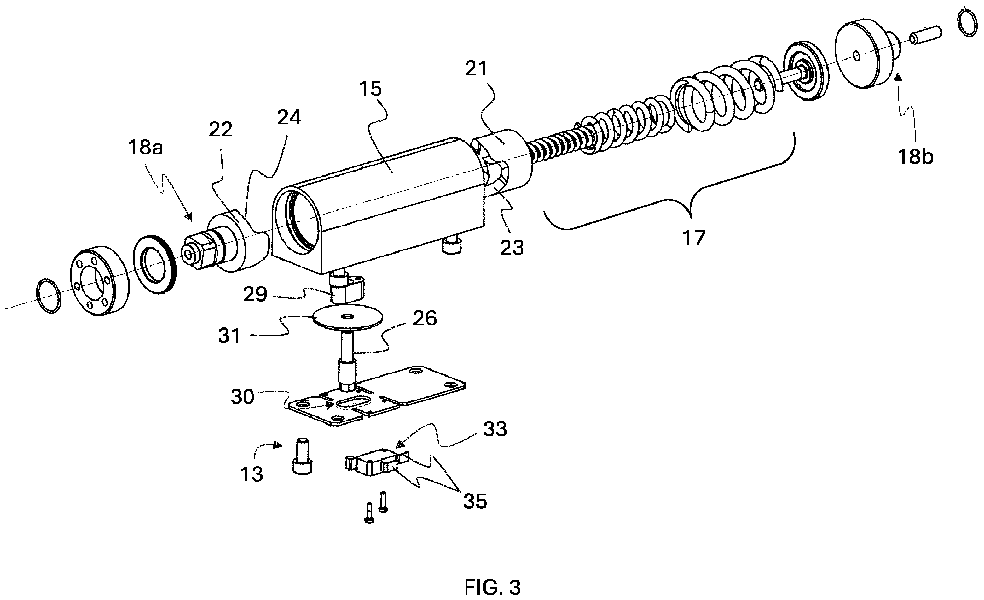

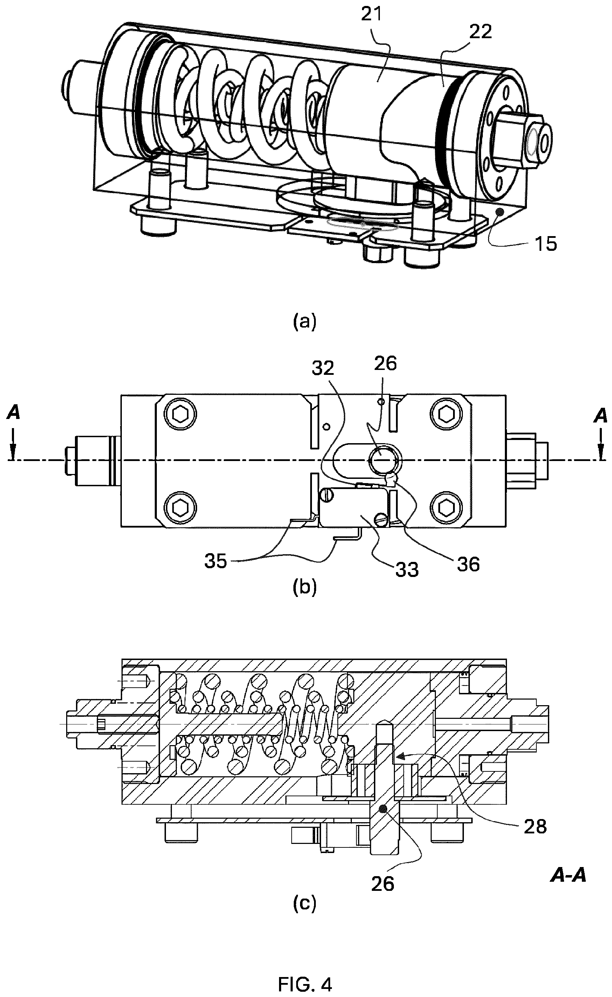

Erfindungsgemäß ist eine Kochvorrichtung 1 zur Zubereitung von Speisen in Großküchen vorgesehen die in Anbetracht der Figuren 1 bis 7 beschrieben wird.

Gemäß dem vorliegenden Ausführungsbeispiel umfasst die Kochvorrichtung 1 eine Topfeinrichtung 2, eine Deckeleinrichtung 3, eine Scharniereinrichtung 4 und eine Detektionseinrichtung 5.

Die Topfeinrichtung 2 ist eine Pfanne oder ein Kochtopf. Die Pfanne hat im Vergleich zum Kochtopf eine größere Öffnung, relativ zum Volumen. Die Topfeinrichtung 2 kann sowohl einen in etwa runden als auch einen in etwa rechteckigen Querschnitt aufweisen. Von der Topfeinrichtung 2 wird in Axialrichtung 6 ein Volumen von einer Unterseite 7 zu einer Oberseite 8 aufgespannt. An der Oberseite 8 der Topfeinrichtung 2 ist eine Topföffnung 9 angeordnet. Die Topfeinrichtung 2 ist in ein Gehäuse 10, welches das Volumen der Topfeinrichtung 2 übersteigt, eingefasst. Das Gehäuse 10 sowie die Topfeinrichtung 2 sind aus einem leicht säuberbaren Material ausgebildet, beispielsweise Edelstahl oder Messing oder Keramik (Fig. 1).

Gemäß dem vorliegenden Ausführungsbeispiel sind am Gehäuse 10 ein Festwasseranschluss 11 und eine Anzeigeeinrichtung 12 angebracht. Innerhalb des Gehäuses 10 befinden sich Heizelemente, die zur Aufheizung der Topfeinrichtung 2 dienen (Fig. 1).

Ebenfalls ist im Bereich der Oberseite 8 des Gehäuses 10 die Scharniereinrichtung 4 angeordnet.

Die Scharniereinrichtung 4 ist zur Verbindung des Gehäuses 10 oder Rahmens und der Deckeleinrichtung 3 ausgebildet. Die Deckeleinrichtung 3 wird über die Scharniereinrichtung 4 relativ zum Gehäuse 10 bewegt. Dadurch wird die Topfeinrichtung 2 mit der Deckeleinrichtung 3 geöffnet bzw. geschlossen. Die Scharniereinrichtung 4 vollzieht also eine Drehbewegung, die in einer Auf-Zu-Bewegung oder einer Schwenkbewegung der Deckeleinrichtung 3 resultiert.

Das Gehäuse 10 und die Scharniereinrichtung 4 sind mittels einer Schraubverbindung an Schraubpunkten 13 im Bereich der Scharniereinrichtung 4, welcher in Richtung des Gehäuses 10 weist, miteinander verschraubt.

Die Deckeleinrichtung 3 ist entlang einer Längsachse 14 an zwei gegenüberliegenden Enden der Scharniereinrichtung 4 befestigt. Die Längsachse 14 verläuft parallel zur Oberseite der Topfeinrichtung 2.

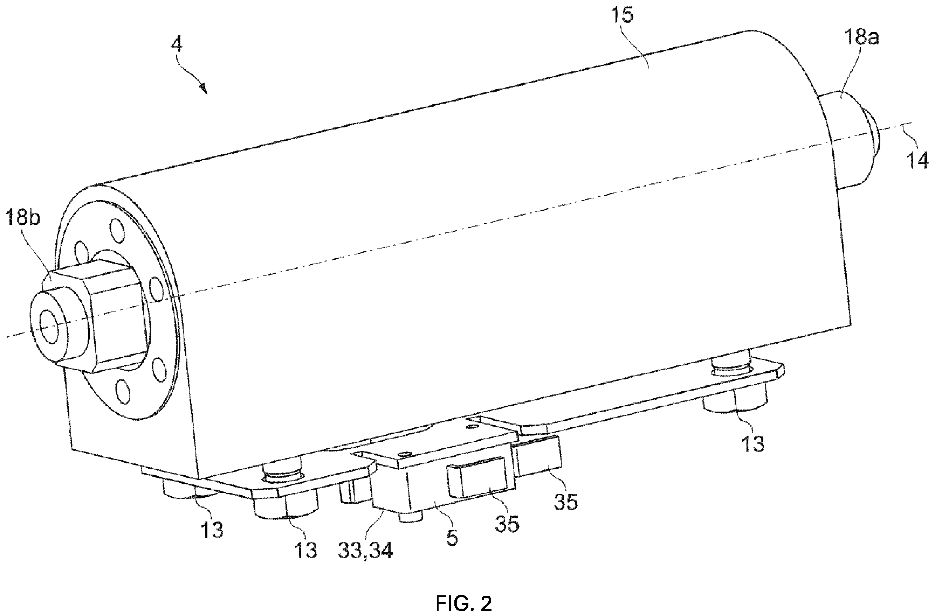

Figuren 2, 3 und 4(a) zeigen, dass die Scharniereinrichtung 4 von einer Scharnierhülle 15 umgeben ist. Auf diese Weise sind ein Vorspannelement 16 und eine Federeinrichtung 17, sowie die Detektionseinrichtung 5 vor äußeren Einflüssen durch die Scharnierhülle 15 geschützt.

Die Deckeleinrichtung 3 und die Scharniereinrichtung 4 sind durch eine Schraubverbindung an den Befestigungspunkten 18 (d.h. 18a und 18b) miteinander verbunden. Weiterhin sind die Deckeleinrichtung 3 und die Scharniereinrichtung 4 mit dem Gehäuse 10 an den Befestigungspunkten (z.B. über Schraubenpunkte 13) verbunden.

Damit die Deckeleinrichtung 3 in einem Öffnungszustand durch die Scharniereinrichtung 4 gehalten werden kann, muss das Vorspannelement 16 eine Haltekraft aufbringen. Die Haltekraft wird von der Federeinrichtung 17 mit dem Vorspannelement 16 erzeugt. Dafür umfasst die Scharniereinrichtung 4 einen beweglichen Teil 19 und einen ortsfesten Teil 20. Der im Folgenden beschriebene Mechanismus ist bereits aus dem Dokument DE 10 2017 210 842 B3 bekannt.

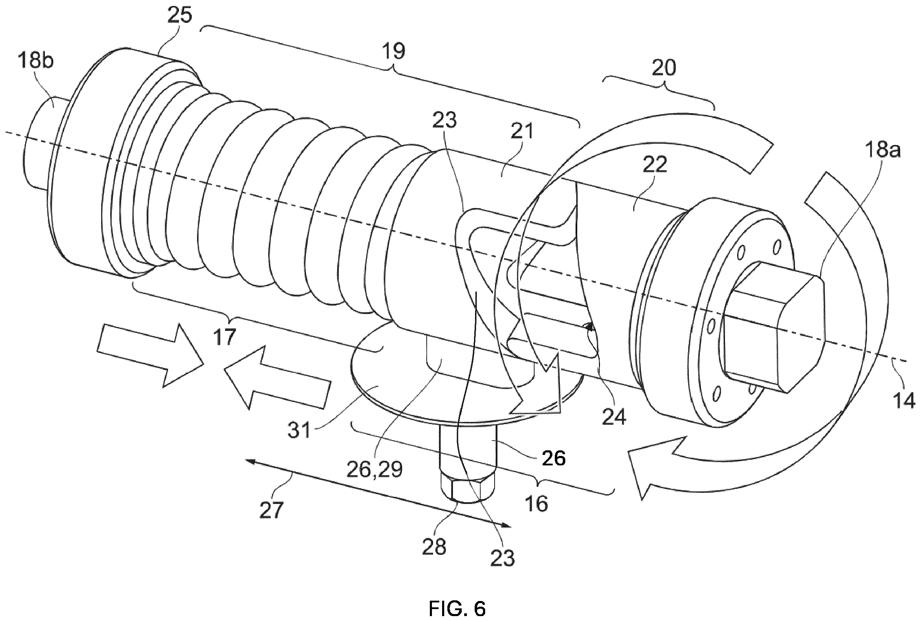

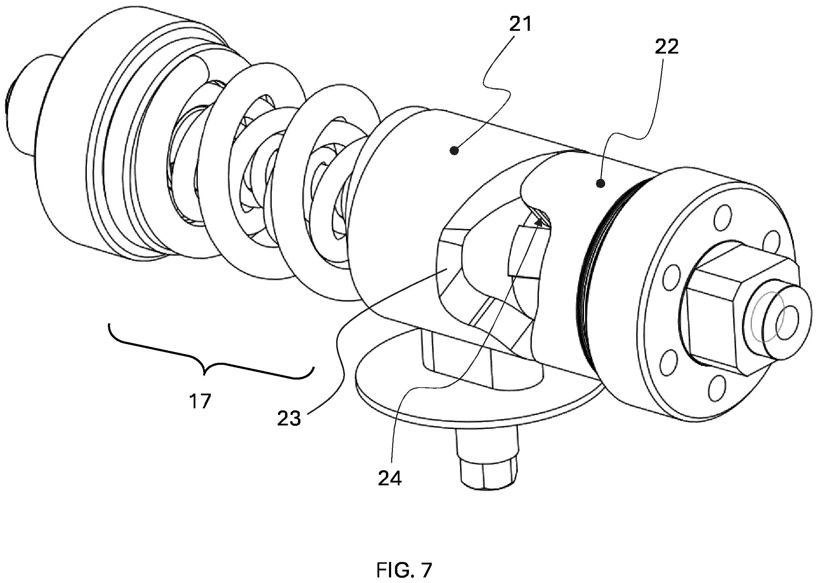

Die beiden Teile 19, 20 weisen jeweils zueinander gerichtete Kurvenelemente 21, 22 auf, die derart korrespondierend geformt sind, dass sie ineinandergreifen oder über umlaufende Kurvenflächen 23, 24 (wie z.B. entsprechend korrespondierende aufeinander gleitende Nockenflächen) auseinander bewegt werden können. Dabei weist das erste Kurvenelement 21 am beweglichen Teil 19 eine erste Kurven- oder auch so genannte umlaufende Kreisfläche 23 auf. Korrespondierend dazu weist das zweite Kurvenelement 22 des ortsfesten Teils 20 eine zweite Kurven- oder auch so genannte umlaufende Kreisfläche 24 auf. Die Kurven- oder Kreisflächen 23 und 24 weisen einen Gleiteingriff auf. Weiterhin ist an den Kurvenelementen 21 und 22 ein Anschlag ausgebildet, wodurch die Drehbewegung der Kurvenelemente 21 und 22 relativ zueinander begrenzt ist. Das Vorspannelement 16 umfasst die operativ gekoppelten Kurvenelemente 21 und 22. Figuren 6 und 7 zeigen jeweils verschiedene Ausführungsformen der Kurvenelemente 21 und 22 mit entsprechend unterschiedlichen Kurvenflächen 23 und 24.

Eine Auf-Zu-Bewegung entspricht im Folgenden der Schwenkbewegung der Deckeleinrichtung 3. Die lineare Auf-Zu-Bewegung der Deckeleinrichtung 3 wird in einer Drehbewegung des ortsfesten Teils 20 am Befestigungspunkt 18a umgesetzt. Die Bewegung des ortsfesten Teils 20 ist von dem zweiten Kurvenelement 22 auf das erste Kurvenelement 21 übertragbar. In einer Auf-Bewegung der Deckeleinrichtung 3 schiebt das zweite Kurvenelement 22 das erste Kurvenelement 21 im Bereich der jeweiligen Kreisflächen 24 und 23 von sich weg, sodass die Kraft der Drehbewegung die Federeinrichtung 17 entgegen der Federkraft der mindestens einen Spiralfeder 25 zusammendrückt.

Die Spiralfeder 25 umfasst zumindest eine oder mehrere Federn oder Spiralfedern (z.B. drei ineinander parallel gekoppelte Federn), die ineinandergreifen bzw. ineinander angeordnet sind. Die Spiralfeder 25 ist zwischen dem zweiten Befestigungspunkt 18b und dem ersten Kurvenelement 21 entlang der Längsachse 14 angeordnet.

Durch die Auf-Bewegung wird die dafür benötigte Kraft mittels der Kurvenelemente 21 und 22 in eine axial gerichtete lineare Bewegung umgesetzt, sodass diese Kraft in der zusammengedrückten Spiralfeder 25 speicherbar ist. Die Spiralfeder 25 wird dann in der zusammengedrückten Position durch die in einem ausreichenden Reibverschluss gegeneinander stehenden Kurvenflächen 23 und 24 gehalten.

Bei einer Zu-Bewegung gleiten die Kurvenflächen 23, 24 der Kurvenelemente 21 und 22 derart übereinander, dass sich die Spiralfeder 25 in Axialrichtung entspannen kann.

In der Scharnierhülle 15 kann außerdem eine Verstelleinrichtung angeordnet sein, um den Verdrehwinkel zwischen Deckeleinrichtung und Gehäuse festzulegen.

Weiterhin kann eine Federkrafteinstelleinrichtung (nicht dargestellt) vorgesehen sein. Diese umfasst z.B. ein plattenförmiges Element, das an der dem Vorspannelement 16 gegenüberliegenden Seite der Federeinrichtung 17 zwischen Federeinrichtung 17 und Scharnierhülle 15 angeordnet ist und mittels einer Stellschraube (nicht dargestellt) in Längsrichtung der Federeinrichtung 17 verschiebbar ist.

Mittels der Federkrafteinstelleinrichtung ist die Vorspannung der Federeinrichtung 17 stufenlos einstellbar, um diese entsprechend an unterschiedliche Deckel anzupassen zu können.

Ein Geberelement 26 der Detektionseinrichtung 5 hat die Funktion bei Schwenkbewegung der Deckeleinrichtung 3 das entstehende Drehmoment und die durch die Kurvenflächen 23, 24 umgesetzte lineare Verschiebung des Federeinrichtung 17 in eine detektierbare Verschiebung umzusetzen. Parallel zur Verschiebung des beweglichen Teils 19 bewegt sich somit das Geberelement 26 in einem linearen Messbereich 27 der sich parallel zur Längsachse 14 erstreckt. Dafür ist das Geberelement 26 fest mit dem ersten Kurvenelement 21 verbunden. Das Geberelement 26 ist parallel zur Axialrichtung 6 in Richtung der Unterseite 7 des Gehäuses 10 angeordnet (siehe Figs. 2, 3 und 4).

Zur festen Verbindung mit dem Kurvenelement 21 weist das Geberelement 26 eine Schraubverbindung 28 auf. Das Geberelement 26 umfasst ein erstes Abstandselement 29 und ein zweites Abstandselement 30, zwischen denen ein Separierungselement 31 angeordnet ist. Das Separierungselement 31 erstreckt sich in etwa kreisförmig radial zur Schraubverbindung 28 parallel zur Längsachse 14 bildet eine Barriere zwischen der Scharniereinrichtung 4 und dem Gehäuse 10, sodass keine Speisereste, Putzmittel, Flüssigkeiten etc. ins Gehäuse 10 dringen können.

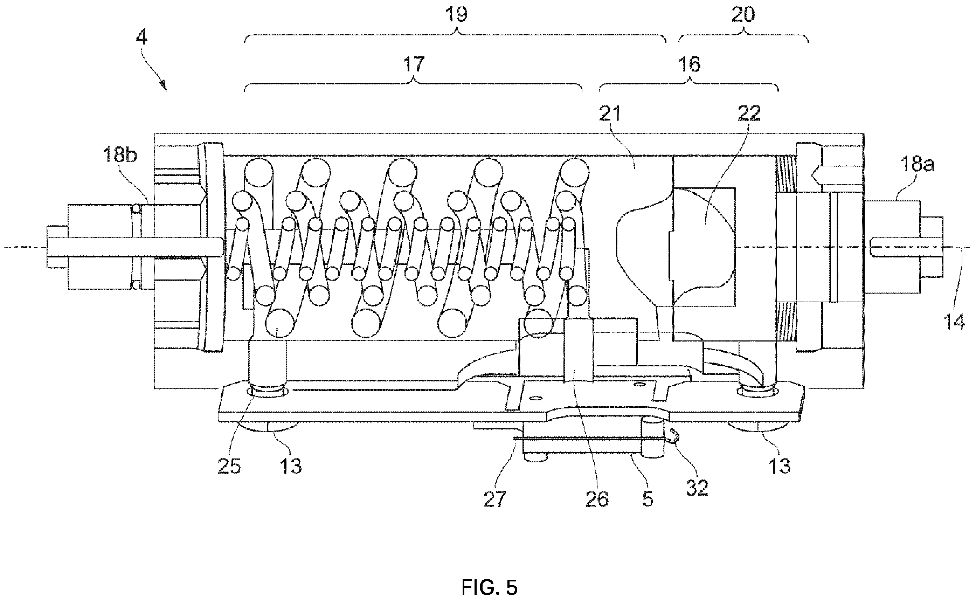

Das Geberelement 26 lenkt durch die Verschiebung des beweglichen Teils 19 einen Messfühler 32 aus, sodass die Auslenkung des Messfühlers 32 von einem Linearsensor 33 im Messbereich 27 detektierbar ist. Der Messfühler 32 ist aus einem biegbaren Material, wie etwa einer dünnen Metallplatte, ausgebildet, um der Bewegung des Geberelements 26 folgen zu können. Der Messfühler 32 erstreckt sich entlang des Bewegungsweges des Geberelements 26 parallel zur Längsachse 14 (siehe hierzu Fi. 4(b) und Fig.5). Das Geberelement 26 gleitet am Messfühler 32 entlang. Damit der Messfühler 32 immer Kontakt zum Geberelement 26 ist, ist für den Fall der größten Auslenkung, d.h. wenn die Federeinrichtung 17 entspannt ist und das Geberelement 26 die nächste Position zum ortsfesten Teil 20 einnimmt, eine Verstärkung in Form eines in etwa zylinderförmigen Körpers 36 an einem Ende des Messfühlers 32 angebracht.

Das andere Ende des Messfühlers 32 ist in das Gehäuses 34 des Linearsensor 33 eingebracht.

Der Linearsensor 33 kann eine Spannungs- und/oder Stromänderung an einer Auswerteeinrichtung detektieren. Dafür ist der Linearsensor 33 als Potentiometer, Amperemeter und/oder elektrischer Schalter ausgebildet.

Im vorliegenden Ausführungsbeispiel ist der Linearsensor 33 als elektrischer Schalter, im speziellen als Mircoschalter, ausgebildet. Im Microschalter ist ein Rollenhebel 32 als Messfühler integriert. Der Microschalter weist zwei elektrische Kontakte 35 auf, über welche der Schaltzustand auslesbar ist.

Der Rollenhebel 32 ist bereits durch geringe Positionsänderung des Geberelements 26 auslenkbar. Ab einer bestimmten Position des Geberelements 26 ist während der Schwenkbewegung ein Einschaltpunkt erreicht, wodurch ein Stromfluss unterbrochen oder ermöglicht wird. Im umgekehrten Fall der Schwenkbewegung ist ein Ausschaltpunkt auf einer anderen Position des Geberelements 26 vorhanden, um ein Flattern des Schalters zu verhindern.

Mit einem einfachen Microschalter 33 kann der Öffnungszustand ein geschlossener- oder geöffneter Zustand der Deckeleinrichtung 3 sein. Beispielsweise ist eine Auslenkung über dem Einschaltpunkt als geschlossener Zustand der Deckeleinrichtung 3 zu bewerten und eine Auslenkung über dem Ausschaltpunkt als geöffneter Zustand. Im Zwischenbereich, zwischen dem Einschaltpunkt und dem Ausschaltpunkt, ist in dieser Ausführung kein weiterer Öffnungszustand bestimmbar.

Allerdings ist mit der vorliegenden Erfindung auch möglich, dass der Öffnungszustand ein beliebiger Öffnungsbereich oder ein Öffnungswinkel der Deckeleinrichtung 3 von der Detektionseinrichtung 5 bestimmbar ist. Dafür muss der Linearsensor 33 z.B. mehrere Stufen von Strom- und/oder Spannungsänderungen oder auch stufenlose Änderungen detektieren können. Für die stufenlose Detektion wäre beispielsweise ein analoges Potentiometer denkbar. Im Fall der Stufendetektion könnte eine digitale Schaltung mit einem Analog-Digital-Umsetzer eingesetzt werden.

Die Spannungs- und/oder Stromänderung ist dann von einer Auswerteeinrichtung bestimmbar. Die Auswerteeinrichtung übersetzt den bestimmten Strom- oder Spannungswert in einen dafür definierten Öffnungszustand. Die Auswerteeinrichtung ist mit einer Anzeigeeinrichtung 12 verbunden, worauf der Öffnungszustand darstellbar ist. Optional ist die Auswerteeinrichtung oder eine andere Steuereinrichtung geeignet die Zeitspanne, d.h. wie lange der aktuelle Öffnungszustand bereits andauert, zu erfassen oder auch zu bestimmen wann dieser zu ändern ist. Die Anzeigeeinrichtung 12 kann auch eine Signaleinrichtung umfassen, die visuelle oder auditive Reize erzeugen kann. Beispielsweise kann eine LED-Lampe zu blinken beginnen oder ein Lautsprecher einen Ton erklingen lassen, wenn der Öffnungszustand zu verändern ist.

Weiterhin kann die Auswerteeinrichtung mit einer Aktuatoreinrichtung verbunden sein. Durch die Aktuatoreinrichtung kann der Öffnungszustand der Deckeleinrichtung 3 verändert werden. Die Aktuatoreinrichtung kann beispielsweise aus einem stabförmigen Element und einem Motor ausgebildet sein. Ein Ende des stabförmigen Elements ist z.B. fest mit dem Rand der Deckeleinrichtung 3 verbunden. Der Motor kann dann die Position des stabförmigen Elements entlang seiner Längsachse verändern, sodass ein gewünschter Öffnungszustand der Deckeleinrichtung 3 eingestellt werden kann.

Optional sind die Auswerteeinrichtung und Aktuatoreinrichtung auch mit einer Steuereinheit verbunden, die mit der Auswerteeinheit, der Wasserzufuhr, den Heizelementen und weiteren Sensoren, wie Temperatursensor und Feuchtigkeitssensor, zusammenwirkt. Damit ist über die aktive Regelung der Heizelemente, der Deckelöffnung und der Wasserzufuhr ein optimaler Garvorgang realisierbar.

### Bezugszeichenliste

- 1: Kochvorrichtung
- 2: Topfeinrichtung
- 3: Deckeleinrichtung
- 4: Scharniereinrichtung
- 5: Detektionseinrichtung
- 6: Axialrichtung
- 7: Unterseite
- 8: Oberseite
- 9: Topföffnung
- 10: Gehäuse Topfeinrichtung
- 11: Festwasseranschluss
- 12: Anzeigeeinrichtung
- 13: Schraubpunkte
- 14: Längsachse
- 15: Scharnierhülle, -gehäuse
- 16: Vorspannelement
- 17: Federeinrichtung
- 18: Befestigungspunkte
- 19: beweglicher Teil
- 20: ortsfester Teil
- 21: erstes Kurvenelement
- 22: zweites Kurvenelement
- 23: erste Kurven- oder Kreisfläche
- 24: zweite Kurven- oder Kreisfläche
- 25: Spiralfeder
- 26: Geberelement
- 27: Axialrichtung / Schließrichtung
- 28: Schraubverbindung
- 29: erstes Abstandselement
- 30: zweites Abstandselement
- 31: Separierungselement
- 32: Messfühler
- 33: Linearsensor
- 34: Sensorgehäuse (Linearsensor)
- 35: elektrische Kontakte
- 36: Messfühler Zylinder

## Patentansprüche

1. Kochvorrichtung (1), umfassend:
- eine Topfeinrichtung (2) mit einem Gehäuse (10),
- eine Deckeleinrichtung (3) zum Verschließen der Topfeinrichtung (2),
- eine Scharniereinrichtung (4) mit einem Scharniergehäuse (15), die die Deckeleinrichtung (3) schwenkbar mit der Topeinrichtung (2) verbindet, und
- eine Detektionseinrichtung (5) zum Detektieren eines Öffnungszustandes der Deckeleinrichtung,
wobei die Detektionseinrichtung (5) im Bereich der Scharniereinrichtung (4) angeordnet ist.

2. Kochvorrichtung (1) gemäß Anspruch 1,
**dadurch gekennzeichnet,**
**dass** die Detektionseinrichtung (5) innerhalb des Scharniergehäuse (15) angeordnet ist.

3. Kochvorrichtung (1) gemäß einem der Ansprüche 1 und 2,
**dadurch gekennzeichnet,**
**dass** die Detektionseinrichtung (5) innerhalb des Gehäuses (10) angeordnet ist.

4. Kochvorrichtung (1) gemäß einem der vorhergehenden Ansprüche,
**dadurch gekennzeichnet,**
**dass** die Detektionseinrichtung (5) ein Geberelement (26) zur Übersetzung einer Schwenkbewegung in eine Linearbewegung und einen Sensor (33) zur Aufnahme der Linearbewegung aufweist.

5. Kochvorrichtung (1) gemäß Anspruch 4,
**dadurch gekennzeichnet,**
**dass** das Geberelement (26) in der Scharniereinrichtung (4) angeordnet ist und in das Gehäuse (10) der Topfeinrichtung (2) hineinragt, wobei das Geberelement (26) zum Zusammenwirken mit den Sensor (33) ausgebildet ist, und wobei der Sensor (33) abgedichtet im Gehäuse (10) der Topfeinrichtung (2) angeordnet ist.

6. Kochvorrichtung (1) gemäß einem der Ansprüche 2 bis 5,
**dadurch gekennzeichnet,**
**dass** die Scharniereinrichtung (4) ein Vorspannelement (16) aufweist, das eine vorgespannte Federeinrichtung (17), einen ortsfesten Teil (20) und einen beweglichen Teil (19) umfasst, wobei Kurvenflächen (23) des beweglichen Teils (19) und Kurvenflächen (24) des ortsfesten Teils (20) durch eine Drehbewegung der Scharniereinrichtung (4) ineinander greifend gekoppelt oder auseinander bewegend entkoppelt werden, wodurch die Federeinrichtung (17) entsprechend vorspannbar und/oder entspannbar ist.

7. Kochvorrichtung (1) gemäß Anspruch 6,
**dadurch gekennzeichnet,**
**dass** das Geberelement (26) fest mit dem beweglichen Teil (19) der Federeinrichtung (17) verbunden ist, um bei einer Schwenkbewegung der Deckeleinrichtung (3) das Drehmoment entsprechend in eine Verschiebung des beweglichen Teils (19), und dadurch das Geberelements (26), in Axialrichtung (6) umzusetzen.

8. Kochvorrichtung (1) gemäß Anspruch 7,
**dadurch gekennzeichnet,**
**dass** das Geberelement (26) durch die Verschiebung in Axialrichtung (6) einen Messfühler (32) auslenkt, sodass die Auslenkung des Messfühlers (32) von einem Linearsensor (33) detektierbar ist.

9. Kochvorrichtung (1) gemäß Anspruch 8,
**dadurch gekennzeichnet,**
**dass** der Linearsensor (33) ein Potentiometer, ein Amperemeter und/oder einen elektrischen Schalter aufweist, um eine Spannungs- und/oder Stromänderung an einer Auswerteeinrichtung zu detektieren.

10. Kochvorrichtung (1) gemäß einem der vorhergehenden Ansprüche,
**dadurch gekennzeichnet,**
**dass** der Öffnungszustand ein geschlossener oder geöffneter Zustand der Deckeleinrichtung (3) ist, und/oder, dass der Öffnungszustand ein beliebiger Öffnungsbereich oder ein beliebiger Öffnungswinkel der Deckeleinrichtung (3) ist, der von der Detektionseinrichtung (5) bestimmbar ist.

11. Kochvorrichtung (1) nach einem der vorhergehenden Ansprüche,
**dadurch gekennzeichnet,**
**dass** der Öffnungszustand der Deckeleinrichtung (3) von einer Aktuatoreinrichtung einstellbar ist, und/oder, dass eine Federkrafteinstelleinrichtung vorgesehen ist, die ein plattenförmiges Element, das an der dem Vorspannelement (16) gegenüberliegenden Seite der Federeinrichtung (17) zwischen Federeinrichtung (17) und Scharnierhülle (15) angeordnet sein kann, und mittels einer Stellschraube in Längsrichtung der Federeinrichtung verschiebbar ist, um die Vorspannung der Federeinrichtung (17) einzustellen.
